# EUROPÄISCHE PATENTSCHRIFT

(11) **EP 4 469 234 B1**
(45) Veröffentlichungstag und Bekanntmachung des Hinweises auf die Patenterteilung: **09.12.2026**
(21) Anmeldenummer: 23704063.9
(22) Anmeldetag: 27.01.2023
(51) Int. Cl.: G02F 1/11, G02F 1/295, G02F 1/33

(54) **LENKSYSTEM FÜR EINEN LASERSTRAHL**
STEERING SYSTEM FOR A LASER BEAM
SYSTÈME DE GUIDAGE POUR UN FAISCEAU LASER

(30) Priorität: 28.01.2022 DE 102022101993; 01.02.2022 DE 102022102298
(43) Veröffentlichungstag der Anmeldung: 04.12.2024
(73) Patentinhaber: Laser Zentrum Hannover e.V., 30419 Hannover (DE)
(72) Erfinder: WELLMANN, Felix, 30419 Hannover (DE)
(74) Vertreter: Gramm, Lins & Partner Patent- und Rechtsanwälte PartGmbB
(86) Internationale Anmeldenummer: PCT/EP2023/052009
(87) Internationale Veröffentlichungsnummer: WO 2023/144309

(56) Entgegenhaltungen:
- US-A- 5 448 417

## Beschreibung

Die Erfindung betrifft ein Lenksystem für einen Laserstrahl zur Lasermaterialbearbeitung, das wenigstens eine Ablenkeinrichtung, durch die der Laserstrahl ablenkbar ist, wenigstens eine Zuleitung, durch die der Laserstrahl der Ablenkeinrichtung zuleitbar ist, und wenigstens ein Faserarray mit einer Mehrzahl von Lichtleitfasern aufweist, das derart angeordnet ist, dass der Laserstrahl von der Ablenkeinrichtung auf eine Einkoppelfläche des Faserarrays abgelenkt wird, wobei die Ablenkeinrichtung wenigstens ein nicht-mechanisches Ablenkelement aufweist.

Eine solches Lenksystem ist aus der US 5,448,417 bekannt. Es wird verwendet, um unterschiedliche zeitliche Abschnitte eines Laserpulses durch unterschiedliche Fasern zu leiten, die verschiedene optische Längen aufweisen. Die verschiedenen Abschnitte werden wieder zu einem Laserpuls in einer einzigen Lichtleitfaser zusammengeführt, nachdem die Ablenkeinrichtung durchlaufen wurde. So kann der zeitliche Verlauf des Laserpulses beeinflusst und geändert werden.

In vielen Bereichen von Produktion und Fertigung werden heute Laser als etabliertes Werkzeug eingesetzt. Laserstrahlquellen, die kurz als Laser bezeichnet werden, werden beispielsweise zum automatisierten Schneiden, Schweißen, zur Additiven Fertigung, zur Oberflächenfunktionalisierung sowie zur generellen Bearbeitung von verschiedenen Werkstoffen, wie beispielsweise Glas, Metall und Polymeren bis hin zu Verbundwerkstoffen eingesetzt. Laserstrahlen ermöglichen eine Materialbearbeitung mit sehr hoher Präzision und stellen inzwischen für viele industrielle Fertigungsanwendungen ein nahezu alternativloses Werkzeug dar. Dabei kommen häufig sogenannte Laserscanner zum Einsatz, die den Laserstrahl relativ zu einem zu bearbeitenden Werkstück in einer oder mehrerer Raumrichtungen bewegen. Problematisch ist bei vielen Anwendungen die begrenzte Relativgeschwindigkeit zwischen dem Laserstrahl und dem Werkstück. Die Folgen dieser Begrenzung sind limitierte Bearbeitungsgeschwindigkeiten sowie thermisch induzierte Spannungen durch ungleichmäßigen Wärmeeintrag im zu bearbeitenden Werkstück.

Ein Lenksystem für einen Laserstrahl ist in der Lage, die Ausbreitungsrichtung eines Laserstrahls dynamisch zu verändern, also den Laserstrahl zu unterschiedlichen Zeiten in unterschiedliche Richtungen zu lenken. Dies geschieht in der Regel ohne dass sich die Richtung des Laserstrahls, aus der er dem Lenksystem zugeleitet wird, ändert. Eine statische Ablenkung, wie sie beispielsweise durch einen unbeweglichen Spiegel erfolgen kann, ist nicht ausreichend. Gegebenenfalls kann zusätzlich eine Strahlformung durch das Lenksystem erfolgen, die in einigen Ausführungsformen ebenfalls dynamisch, also zeitlich veränderlich, ist. Dies ist oft von Vorteil, jedoch nicht notwendig.

Kommerziell verfügbare Galvanometerscanner ermöglichen bei einer zweidimensionalen Bearbeitung mit mehr als 1 kW Laserleistung Scangeschwindigkeiten von bis zu 50 m/s. Dies bedeutet, der Lichtfleck, der durch den auf das Werkstück treffenden Laserstrahl hervorgerufen wird, bewegt sich mit maximal dieser Geschwindigkeit über die Oberfläche des Werkstücks. Alternative Technologien, wie beispielsweise Polygonscanner erreichen deutlich höhere Geschwindigkeiten von bis zu einem km/s, erlauben jedoch nur eine eindimensionale Bearbeitung mit konstanter Geschwindigkeit des Lichtflecks auf dem Werkstück. Für eine mehrdimensionale Hochgeschwindigkeitsbearbeitung von mehreren Tausend m/s mit Galvanometerscannern und Polygonscannern ist im Stand der Technik keine Lösung verfügbar. Strahlablenksysteme, die nicht über beschleunigte massebehaftete Bauteile verfügen, erreichen sehr hohe Strahlablenkgeschwindigkeiten von mehreren km/s. Allerdings ist das Bearbeitungsfeld, bei für die Lasermaterialbearbeitung gängigen Parametern, auf wenige mm² beschränkt.

Im Rahmen der vorliegenden Erfindung ist ein Laser ein Gerät, das kohärente elektromagnetische Strahlung, die sogenannte Laserstrahlung emittiert. Der Laserstrahl ist der vom Laser ausgesandte Lichtstrahl, also die sich geradlinig ausbreitende elektromagnetische Strahlung. Wird der Laserstrahl bewegt, ändert sich die Richtung, in der sich die elektromagnetische Strahlung ausbreitet. Dies bedeutet, dass sich der Pfad, entlang der sich die elektromagnetische Strahlung bewegt, mit der Zeit verändert und verschiebt.

Der Erfindung liegt daher die Aufgabe zugrunde, ein Lenksystem für einen Laserstrahl zur Lasermaterialbearbeitung vorzuschlagen, mit dem eine höhere Ablenkgeschwindigkeit des Laserstrahls erreichbar ist. Zudem sollte das Bearbeitungsfeld möglichst groß und bevorzugt frei formbar, beispielsweise als Linie, ausgebildet werden können.

Die Erfindung löst die gestellte Aufgabe durch ein Lenksystem für einen Laserstrahl zur Lasermaterialbearbeitung gemäß dem Oberbegriff des Anspruchs 1, das sich dadurch auszeichnet, dass die Lichtleitfasern des Faserarrays jeweils eine Auskoppelfläche aufweisen, durch die eingekoppelte Laserstrahlung auskoppelbar ist und die derart angeordnet ist, dass ausgekoppelte Laserstrahlung wenigstens einer Lasermaterialbearbeitungsstation zugeleitet wird, wobei die ausgekoppelten Laserstrahlen auf mehrere Werkstücke zur Lasermaterialbearbeitung oder an mehrere Stellen eines Werkstückes zur Lasermaterialbearbeitung geleitet werden .

Bei der Erfindung wird folglich eine Ablenkeinrichtung, mit der ein Laserstrahl für die Lasermaterialbearbeitung abgelenkt werden kann, mit wenigstens einem Faserarray, das auch als Faserbündel bezeichnet werden kann, kombiniert. Ein solches Faserbündel weist eine Mehrzahl von Lichtleitfasern auf, in die das Laserlicht eingekoppelt werden kann. Dazu verfügt das Faserarray über eine Einkoppelfläche, die vorzugsweise aus den Einkoppelflächen der einzelnen Lichtleitfasern des Faserarrays gebildet wird. Das Lenksystem beruht somit auf einer faserpixelbasierten Steuerung, wobei jede Lichtleitfaser des Faserarrays einen Pixel darstellt, und besitzt deutlich weniger Strahlenquellen, also Laser, als ansteuerbare Faserkanäle. Jede Lichtleitfaser des Faserarrays bildet dabei einen einzelnen Faserkanal. Dies ist insbesondere dann zutreffend, wenn eine Lichtleitfaser genau einen Kern enthält, durch den das Laserlicht geleitet wird. Dies ist beispielsweise bei einigen oder allen Lichtleitfasern der Fall. **In** anderen Ausführungsformen der vorliegenden Erfindung weist das Faserarray zumindest eine, gegebenenfalls mehrere, Multikernfasern auf. **In** wieder anderen Ausführungsformen sind alle Lichtleitfasern des Faserarray als Multikernfaser ausgebildet. Eine Multikernfaser enthält mehr als einen Kern, durch den Laserlicht geleitet werden kann. Wird wenigstens eine derartige Lichtleitfaser im Faserarray verwendet, ist es von Vorteil, aber nicht notwendig, dass jeder einzelne Kern der Multikernfaser einen einzelnen Faserkanal bildet.

Die Ablenkeinrichtung ist eingerichtet, den durch die Zuleitung eintretenden Laserstrahl dynamisch, also zeitlich veränderlich, abzulenken und ihn so beispielsweise unterschiedlichen Lichtleitfasern zuzuleiten. Dabei verändert sich die Richtung, aus der der Laserstrahl der Zuleitung zugeführt wird oder die Richtung der Zuleitung vorzugsweise nicht. Die dynamische Ablenkung wird zumindest auch, vorzugsweise jedoch ausschließlich durch die Ablenkeinrichtung hervorgerufen. **In** bevorzugten Ausgestaltungen wird der Laserstrahl nacheinander unterschiedlichen Lichtleitfasern und/oder unterschiedlichen Kombinationen von Lichtleitfasern durch die Ablenkeinrichtung zugeleitet, indem der Laserstrahl auf die entsprechenden Einkoppelflächen und/oder den entsprechenden Abschnitt einer Einkoppelfläche geleitet wird. Dies sollte möglichst schnell geschehen. Ein Laserstrahl wird durch die Zuleitung aus einer Zuleitungsrichtung der Ablenkeinrichtung zugeleitet und verlässt die Ablenkeinrichtung entlang einer Ablenkungsrichtung. Diese kann zu bestimmten Zeiten identisch oder verschieden zu der Zuleitungsrichtung sein. Wichtig ist, dass sich ein Winkel zwischen der Zuleitungsrichtung und der Ablenkungsrichtung zeitlich ändert und dass diese zeitliche Änderung des Winkels durch die Ablenkeinrichtung hervorgerufen wird.

Die Einkoppelfläche des Faserarrays kann als eine einzige Einkoppelfläche ausgebildet sein oder aus einer Mehrzahl von Einkoppel-Teilflächen aufgebaut sein. In diesem Fall verfügt bevorzugt jede Lichtleitfaser über eine eigene Einkoppel-Teilfläche, die in einer einfachen Ausgestaltung der Stirnfläche der jeweiligen Lichtleitfaser entspricht.

Die einzelnen Lichtleitfasern verfügen an dem der Einkoppelfläche gegenüberliegenden Ende über wenigstens eine Auskoppelfläche, aus der in die Lichtleitfaser eingekoppelte Laserstrahlen ausgekoppelt wird. Diese Strahlung kann durch die Lichtleitfaser an die benötigte Stelle geleitet werden, sodass die dafür notwendige Ablenkung des Laserstrahls nicht mehr durch die Ablenkeinrichtung selbst, sondern durch den Pfad, den die Lichtleitfaser beschreitet, gebildet und erreicht wird. Bevorzugt wird die Auskoppelfläche aus mehreren Auskoppel-Teilflächen gebildet. Vorzugsweise sind die Stirnflächen der einzelnen Lichtleitfasern die Auskoppel-Teilflächen. Alternativ dazu kann an einzelne, einige oder alle diese Stirnflächen der Lichtleitfasern ein Substrat angebracht sein, dessen den Stirnflächen gegenüberliegende Fläche dann die Auskoppelfläche oder die Auskoppel-Teilfläche für die an dem Substrat befestigten Lichtleitfasern bildet.

Da die Ablenkeinrichtung wenigstens ein nicht-mechanisches Ablenkelement aufweist, müssen zum Ablenken des Laserstrahls nur wenige, vorzugsweise jedoch gar keine Massen bewegt werden. Besonders bevorzugt verfügt die Ablenkeinrichtung folglich nicht über bewegliche Teile, wie beispielsweise Spiegel, die bewegt werden müssen, um den Laserstrahl abzulenken.

Aufgrund von Massenträgheit ist die Vorschubgeschwindigkeit bei aktuell verwendeten Laserstrahllenksystemen für die Lasermaterialbearbeitung, die über bewegliche Teile verfügen, limitiert. Der Einsatz von nicht-mechanischen Ablenkelementen, welche deutlich höhere Ablenkgeschwindigkeiten erreichen, bietet die Möglichkeit die Verfahrensgeschwindigkeit weiter zu erhöhen. Folgen einer geringen Geschwindigkeit ist die geringe Ausbringung (beispielsweise bei Rolle-zu-Rolle-Verfahren) oder der Verzug des gedruckten Bauteils welche durch thermischen Eintrag verursacht wird (beispielsweise beim LPBF (3D-Druck)).

Vorzugsweise verfügt wenigstens ein nicht-mechanisches Ablenkelement über einen akusto-optischen Deflektor (AOD), durch den der Laserstrahl ablenkbar ist. Ein akusto-optischer Deflektor, der auch als akusto-optischer Modulator (AOM) bezeichnet wird, verwendet den akusto-optischen Effekt. Dazu wird beispielsweise ein piezoelektrischer Wandler an einem für die Wellenlänge der Laserstrahlung transparenten Material, wie beispielsweise Telludioxid oder Quarzglas, befestigt. Ein oszillierendes elektrisches Signal treibt den Wandler zum Schwingen an, wodurch Schallwellen im Material erzeugt werden. Diese werden so erzeugt, dass sich stehende oder laufende Schallwellen im Material bilden, die als Dichteschwankungen den Brechungsindex lokal ändern. Dadurch kommt es zu einem Beugungsgitter, an dem einfallende elektromagnetische Strahlung, in diesem Fall das Laserlicht des Laserstrahls gebeugt wird. Wird die Frequenz der erzeugten Schallwellen variiert, lässt sich das Beugungsbild und damit die Ablenkung des Laserstrahls verändern.

In diesem Zusammenhang wird oft zwischen einem akusto-optischen Modulator und einem akusto-optischen Deflektor unterschieden, wobei der AOM als Schalter verwendet wird, der zwischen verschiedenen Beugungsordnungen des Laserlichtes wechselt und der AOD mehrere Orte einer Beugungsordnung, beispielsweise der ersten Beugungsordnung adressieren kann. In beiden Fällen wird der bereits genannte akusto-optische Effekt verwendet.

Besonders bevorzugt verfügt die Ablenkeinrichtung über zwei akusto-optische Deflektoren, von denen jeder das einfallende Licht in einer Raumrichtung ablenkt. Der erste Deflektor lenkt den Laserstrahl folglich in einer ersten Raumrichtung ab. Der zweite Deflektor lenkt den Laserstrahl in einer zweiten Raumrichtung ab. Vorzugsweise stehen die erste Raumrichtung und die zweite Raumrichtung senkrecht aufeinander, schließen folglich einen rechten Winkel ein. Dies ist von Vorteil, jedoch nicht notwendig. Ausreichend ist, wenn die beiden Raumrichtungen linear unabhängig voneinander sind. Dann ist es durch die beiden akusto-optischen Deflektoren möglich, eine vollständige zweidimensionale Einstellung der Ablenkung des Laserstrahls vorzunehmen.

Vorzugsweise weist wenigstens ein nicht-mechanisches Ablenkelement wenigstens einen elektro-optischen Deflektor auf, durch den der Laserstrahl ablenkbar ist. Dabei wird ausgenutzt, dass bestimmte Materialien einen elektro-optischen Effekt, also die Änderung der optischen Eigenschaften unter der Einwirkung eines elektrischen Feldes, zeigen. Beispielhaft seien der Pockels-Effekt und der Kerr-Effekt genannt. Bei beiden kommt es zu einer Änderung des Brechungsindex des jeweiligen Materials unter der Einwirkung des elektrischen Feldes durch das Anlegen einer Spannung. Dabei wird ein spezieller nichtlinearer elektro-optischer Effekt in bestimmten, wohldefiniert geschnittenen Kristallen ausgewählter transparenter Materialien genutzt, um einen linearen Brechungsindex-Gradienten zu erzeugen, der proportional zur anliegenden Signalspannung ist. Bei Durchgang eines Laserstrahles senkrecht zum Gradienten wird dieser abgelenkt, wobei der Ablenkwinkel durch die außen angelegte Spannung steuerbar ist.

Besonders bevorzugt verfügt die Ablenkeinrichtung über zwei elektro-optische Deflektoren, von denen jeder das einfallende Licht in einer Raumrichtung ablenkt. Der erste Deflektor lenkt den Laserstrahl folglich in einer ersten Raumrichtung ab. Der zweite Deflektor lenkt den Laserstrahl in einer zweiten Raumrichtung ab. Vorzugsweise stehen die erste Raumrichtung und die zweite Raumrichtung senkrecht aufeinander, schließen folglich einen rechten Winkel ein. Dies ist von Vorteil, jedoch nicht notwendig. Ausreichend ist, wenn die beiden Raumrichtungen linear unabhängig voneinander sind. Dann ist es durch die beiden elektro-optischen Deflektoren möglich, eine vollständige zweidimensionale Einstellung der Ablenkung des Laserstrahls vorzunehmen.

Es ist auch denkbar, dass die Ablenkeinrichtung über einen elektro-optischen Deflektor und einen akusto-optischen Deflektor verfügt, von denen jeder den Laserstrahl in einer der beiden Raumrichtungen ablenkt.

Vorzugsweise weist wenigstens ein nicht-mechanisches Ablenkelement eine Einrichtung zur kohärenten Strahlkombination auf. Dabei wird wenigstens ein Laserstrahl, der von wenigstens einem Laser erzeugt wird, in unterschiedliche Anteile aufgeteilt, die dann gegebenenfalls phasenverschoben aber kohärent kombiniert und addiert werden. Die Anteile können auch, gegebenenfalls einzeln, in der optischen Leistung verstärkt werden. Durch die Kohärenz der jeweiligen Anteile kommt es zu einer Interferenz, deren Effekt von der Phasenverschiebung abhängt. Auch dadurch lässt sich die Raumrichtung, in der sich die konstruktive Interferenz ausgebildet, in der sich der Laserstrahl erstreckt, verändern. Auch dies ist mit einem oder mehreren elektro-optischen Deflektor und/oder mit einem oder mehreren akusto-optischen Deflektor kombinierbar.

Zusätzlich zu dem wenigstens einen nicht-mechanischen Ablenkelement verfügt die Ablenkeinrichtung vorzugsweise über wenigstens ein mechanisches Ablenkelement. Dieses weist vorzugsweise wenigstens einen Galvanometer-Scanner und/oder wenigstens einen Polygonscanner auf, durch den der Laserstrahl ablenkbar ist. Zusätzlich oder alternativ dazu weist wenigstens ein mechanisches Ablenkelement ein Mikro-Elektro-Mechanisches System auf, durch das der Laserstrahl ablenkbar ist.

Vorzugsweise verfügt das Lenksystem über eine Laserstrahlquelle.

Erfindungsgemäß verfügen die Lichtleitfasern des Faserarrays über jeweils eine Auskoppelfläche, durch die die eingekoppelte Laserstrahlen auskoppelbar ist und die derart angeordnet ist, dass ausgekoppelte Laserstrahlen wenigstens einer Lasermaterialbearbeitungsstation zugeleitet werden. Diese kann ein weiteres Ablenkelement, beispielsweise einen Polygonscanner, aufweisen. Es ist daher von Vorteil, wenn die aus der Auskoppelfläche ausgekoppelte Laserstrahlung einer weiteren Ablenkeinrichtung zugeleitet wird.

Vorzugsweise verfügt das Faserarray auf der Einkoppelseite und/oder auf der Auskoppelseite über wenigstens 5, bevorzugt wenigstens 10, weiter bevorzugt wenigstens 100, besonders bevorzugt wenigstens 250 Lichtleitfasern pro Quadratzentimeter Querschnittsfläche. Die Lichtleitfasern sind vorzugsweise Multimodefasern, Singlemodefasern, polarisationserhaltende Fasern, Hohlkernfasern, PCF (Photonic Crystal Fibre), Gradienten-Index-Fasern, Stufenindexfasern, Leakage-Channel-Fasern und/oder Multikern-Fasern. Besonders bevorzugt ist die Dichte der Lichtleitfasern auf der Auskoppelseite des Faserarray geringer als die auf der Einkoppelseite. Sie beträgt vorzugsweise wenigstens 0,2 Fasern pro Quadratzentimeter Querschnittsfläche. Weiter bevorzugt beträgt sie wenigstens 1, besonders bevorzugt wenigstens 3 Lichtleitfasern pro Quadratzentimeter Querschnittsfläche.

Erfindungsgemäß werden die aus gekoppelten Laserstrahlen, die aus den Auskoppelflächen verschiedener Lichtleitfasern austreten auf mehrere Werkstücke zur Lasermaterialbearbeitung oder an mehreren Stellen eines Werkstückes zur Lasermaterialbearbeitung des Werkstückes geleitet. Durch die hohe Geschwindigkeit und Umschaltrate des Lenksystem kommt es dabei zu einer nahezu gleichzeitigen Bearbeitung der verschiedenen Stellen des einen Werkstückes oder der mehreren Werkstücke.

Vorzugsweise ist an zumindest ein Teil der Einkoppelfläche, vorzugsweise die ganze Einkoppelfläche, und/oder zumindest ein Teil der Auskoppelflächen, vorzugsweise alle Auskoppelflächen ein Substrat montiert, vorzugsweise geschweißt oder geklebt. Unter einer Einkoppelfläche ist dabei auch eine Einkoppel-Teilfläche und unter einer Auskoppelfläche auch eine Auskoppel-Teilfläche verstanden.

Das Substrat ist dabei aus einem für die Laserstrahlung transparenten Material hergestellt. Die Laserstrahlen, die in eine oder mehrere der Lichtleitfasern eingekoppelt werden sollen, treten dabei zunächst in das Substrat ein. Vorzugsweise sind die Strahlen innerhalb des Substrates konvergierend ausgebildet. Dies bedeutet, dass sich der Querschnitt des Strahls auf dem Weg durch das Substrat verkleinert. Dadurch wird die optische Intensität an der Grenzfläche zwischen Luft und dem Substrat im Vergleich zur Belastung an der Grenzfläche zwischen Luft und Lichtleitfasern ohne Substrat reduziert. Vorzugsweise ist die der Einkoppelfläche gegenüberliegende Fläche des Substrates mit einer Beschichtung versehen, durch die die Reflexion der Laserstrahlung an der Einkoppelfläche verringert wird.

Vorzugsweise ist die gesamte Einkoppelfläche des Faserarrays an dem Substrat befestigt. Alternativ dazu sind mehrere Substrate vorhanden, die an unterschiedlichen Teilen der Einkoppelfläche, bevorzugt an unterschiedlichen Einkoppel-Teilflächen, montiert sind. In einer Ausgestaltung bildet eine Stirnfläche jeder einzelnen Lichtleitfaser eine separate Einkoppel-Teilfläche, an der jeweils ein Substrat befestigt ist.

Das Substrat, das an der Auskoppelfläche angeordnet ist, kann vorzugsweise eine nicht plane Austrittsfläche aufweisen. Diese Austrittsfläche ist vorzugsweise so ausgebildet, dass der austretende Laserstrahl kollimiert oder fokussiert wird. Die Austrittsfläche des Substrates kann insbesondere kugelförmig oder teilkugelförmig ausgebildet sein. Werden mehrere Substrate verwendet, können diese gleich oder unterschiedlich ausgebildet sein. Sie können insbesondere alle kugelförmig sein.

Vorzugsweise weist das Faserarray wenigstens eine Lichtleitfaser auf, durch deren Auskoppelfläche Laserstrahlung wenigstens einer Strahlfalle zuleitbar ist. Eine Strahlfalle ist eine Vorrichtung zum Absorbieren von elektromagnetischer Strahlung. Sie ist beispielsweise als ein schwarzer Hohlraum ausgebildet, in den die zu absorbierende Strahlung geleitet wird. Vorzugsweise ist die Strahlfalle gekühlt, beispielsweise durch eine Wasserkühlung, um die durch die absorbierte elektromagnetische Strahlung eingetragene Wärme abzuführen. Die Laserstrahlung kann auch ohne eine zwischengeschaltete Lichtleitfaser einer Strahlfalle zuleitbar sein. In diesem Fall wird die Laserstrahlung von der Ablenkeinrichtung direkt der Strahlfalle zugeleitet.

Bevorzugt weist das Faserarray wenigstens eine Lichtleitfaser auf, durch deren Auskoppelfläche Laserstrahlung wenigstens einem Sensor, insbesondere einem Intensitätssensor und/oder einem Leistungssensor zuleitbar ist. Damit lässt sich die Intensität und/oder Leistung der Laserstrahlung bestimmen. Ein solcher Sensor ist beispielsweise ein CCD-Chip, eine Diode oder ein Pyrometer. Der Sensor kann auch ein entsprechender ortsaufgelöster Sensor sein.

Vorzugsweise ist wenigstens ein Mantel der Lichtleitfasern strukturiert, so dass in den Mantel eingekoppelte Laserstrahlung zumindest zum Teil, vorzugsweise vollständig aus dem Mantel austritt. Der Mantel kann dabei der Mantel einer einzelnen Lichtleitfaser sein. Alternativ oder zusätzlich dazu kann der Mantel auch ein das ganze Faserarray oder einen Teil des Faserarrays umgebender Mantel, beispielsweise in Form einer Glaskapillare sein.

Die Erfindung löst die gestellte Aufgabe zudem durch ein Faserarray für ein hier beschriebenes Lenksystem.

Mit Hilfe der beigefügten Zeichnung werden einige Ausführungsbeispiele der vorliegenden Erfindung näher erläutert. Es zeigt:
Figur 1 - die schematische Darstellung eines Lenksystems gemäß einem ersten Ausführungsbeispiel der vorliegenden Erfindung und
Figur 2 - die schematische Darstellung eines Lenksystems gemäß einem zweiten Ausführungsbeispiel der vorliegenden Erfindung.

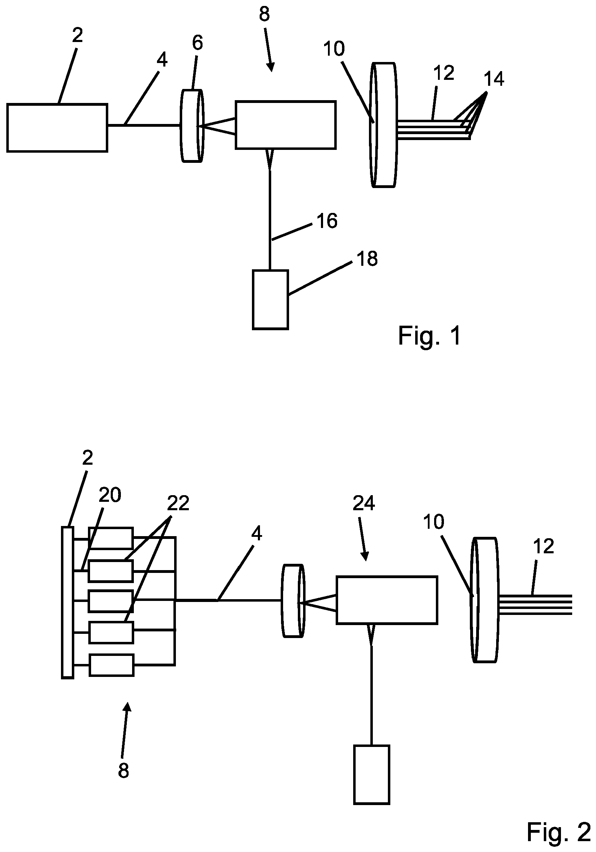

Figur 1 zeigt schematisch ein Lenksystem gemäß einem ersten Ausführungsbeispiel der vorliegenden Erfindung. Es verfügt über eine Laserstrahlquelle 2, die eingerichtet ist, einen Laserstrahl 4 auszusenden. Der Laserstrahl 4 wird über die Zuleitung 6 der eigentlichen Ablenkeinrichtung 8 zugeführt. Diese verfügt über einen akusto-optischen Deflektor, einen elektro-optischen Deflektor oder ein anderes nicht-mechanisches Ablenkelement, durch das der Laserstrahl 4 abgelenkt wird. Im gezeigten Ausführungsbeispiel verfügt die Ablenkeinrichtung 8 zudem noch über eine Einrichtung zur optischen Strahlformung, die aus dem Stand der Technik bekannt ist. Der Laserstrahl 4 trifft nach dem Verlassen der Ablenkeinrichtung 8 auf eine Einkoppelfläche 10 eines Faserarrays 12. Durch das Faserarray 12 wird der Laserstrahl dann an die benötigte Stelle geleitet, die davon abhängt, in welche Lichtleitfaser 14 des Faserarrays 12 der Laserstrahl 4 eingekoppelt wird. Ein möglicher Weg für den Laserstrahl 4 verläuft nicht auf die Einkoppelfläche 10 des Faserarray 12, sondern durch eine weitere Lichtleitung 16 auf einen Sensor 18.

Figur 2 zeigt eine andere Ausgestaltung der vorliegenden Erfindung. Die Laserstrahlquelle 2 erzeugt kohärente elektromagnetische Strahlung, die in eine Mehrzahl von Einzelstrahlen 20 aufgeteilt wird. Im gezeigten Ausführungsbeispiel sind fünf untereinander dargestellte Einzelstrahlen 20 gezeigt. Dies ist jedoch lediglich schematisch und der besseren Darstellbarkeit geschuldet. Über Phasenelemente 22 werden die Einzelstrahlen 20 um einen festen Versatz relativ zueinander phasenverschoben und anschließend kohärent überlagert. Dabei kommt es zur Interferenz zwischen den Einzelstrahlen 20. Es ergibt sich eine konstruktive Interferenz in Raumrichtungen, die von den jeweiligen Phasenverschiebungen der zur Überlagerung gebrachten Einzelstrahlen 20 abhängen. Die Kombination aus Phasenelementen 22 und der kohärenten Überlagerung bildet in der in Figur 2 dargestellten Ausführungsform die Ablenkeinrichtung 8.

Nach dem Verlassen dieser Ablenkeinrichtung 8 trifft der Laserstrahl 4 auf eine Strahlformeinrichtung 24, bevor er auf die Einkoppelfläche 10 des Faserarray 12 trifft.

Am nicht dargestellten gegenüberliegenden Ende der einzelnen Lichtleitfasern 14 des Faserarrays 12 befindet sich eine Auskoppelfläche, aus der die Laserstrahlung aus den einzelnen Lichtleitfasern 14 ausgekoppelt und einer weiteren Einrichtung zugeleitet wird.

### Bezugszeichenliste:

- 2: Laserstrahlquelle
- 4: Laserstrahl
- 6: Zuleitung
- 8: Ablenkeinrichtung
- 10: Einkoppelfläche
- 12: Faserarray
- 14: Lichtleitfaser
- 16: Lichtleitung
- 18: Sensor
- 20: Einzelstrahl
- 22: Phasenelement
- 24: Strahlformeinrichtung

## Patentansprüche

1. Lenksystem für einen Laserstrahl (4) zur Lasermaterialbearbeitung, das
- wenigstens eine Ablenkeinrichtung (8), durch die der Laserstrahl (4) ablenkbar ist,
- wenigstens eine Zuleitung (6), durch die der Laserstrahl (4) der Ablenkeinrichtung (8) zuleitbar ist und
- wenigstens ein Faserarray (12) mit einer Mehrzahl von Lichtleitfasern (14) aufweist,
das derart angeordnet ist, dass der Laserstrahl von der Ablenkeinrichtung auf
eine Einkoppelfläche (10) des Faserarrays (12) abgelenkt wird,
wobei die Ablenkeinrichtung (8) wenigstens ein nicht-mechanisches Ablenkelement aufweist,
**dadurch gekennzeichnet, dass** die Lichtleitfasern (14) des Faserarrays (12) jeweils eine Auskoppelfläche aufweisen, durch die eingekoppelte Laserstrahlung auskoppelbar ist und die derart angeordnet ist, dass ausgekoppelte Laserstrahlung wenigstens einer Lasermaterialbearbeitungsstation zugeleitet wird, wobei die ausgekoppelten Laserstrahlen auf mehrere Werkstücke zur Lasermaterialbearbeitung oder an mehrere Stellen eines Werkstückes zur Lasermaterialbearbeitung geleitet wird.

2. Lenksystem nach Anspruch 1, **dadurch gekennzeichnet, dass** wenigstens ein nicht-mechanisches Ablenkelement einen akusto-optischen Deflektor aufweist, durch den der Laserstrahl ablenkbar ist.

3. Lenksystem nach Anspruch 1 oder 2, **dadurch gekennzeichnet, dass** wenigstens ein nicht-mechanisches Ablenkelement wenigstens einen elektro-optischen Deflektor aufweist, durch den der Laserstrahl ablenkbar ist.

4. Lenksystem nach einem der vorstehenden Ansprüche, **dadurch gekennzeichnet, dass** wenigstens ein nicht-mechanisches Ablenkelement eine Einrichtung zur kohärenten Strahlkombination aufweist.

5. Lenksystem nach einem der vorstehenden Ansprüche, **dadurch gekennzeichnet, dass** die Ablenkeinrichtung zusätzlich wenigstens ein mechanisches Ablenkelement aufweist.

6. Lenksystem nach Anspruch 5, **dadurch gekennzeichnet, dass** wenigstens ein mechanisches Ablenkelement einen Galvanometer-Scanner aufweist, durch den der Laserstrahl ablenkbar ist.

7. Lenksystem nach Anspruch 5 oder 6, **dadurch gekennzeichnet, dass** wenigstens ein mechanisches Ablenkelement ein Mikro-Elektro-Mechanisches System aufweist, durch das der Laserstrahl ablenkbar ist.

8. Lenksystem nach einem der vorstehenden Ansprüche, **dadurch gekennzeichnet**, das das Lenksystem wenigstens eine Laserstrahlquelle aufweist.

9. Lenksystem nach einem der vorstehenden Ansprüche, **dadurch gekennzeichnet, dass** aus der Auskoppelfläche ausgekoppelte Laserstrahlung einer weiteren Ablenkeinrichtung zugeleitet wird.

10. Lenksystem nach einem der vorstehenden Ansprüche, **dadurch gekennzeichnet, dass** das Faserarray wenigstens 10, bevorzugt wenigstens 100, besonders bevorzugt wenigstens 250 Lichtleitfasern aufweist.

11. Lenksystem nach einem der vorstehenden Ansprüche, **dadurch gekennzeichnet, dass** das Faserarray wenigstens 10, bevorzugt wenigstens 100, besonders bevorzugt wenigstens 250 Lichtleitfasern pro Quadratzentimeter Querschnittsfläche aufweist.

12. Lenksystem nach einem der vorstehenden Ansprüche, **dadurch gekennzeichnet, dass** an zumindest ein Teil der Einkoppelfläche, vorzugsweise die ganze Einkoppelfläche, und/oder zumindest ein Teil der Auskoppelflächen, vorzugsweise alle Auskoppelflächen wenigstens ein Substrat montiert, vorzugsweise geschweißt oder geklebt, ist.

13. Lenksystem nach einem der vorstehenden Ansprüche, **dadurch gekennzeichnet, dass** das Faserarray wenigstens eine Lichtleitfaser aufweist, durch deren Auskoppelfläche Laserstrahlung einer Strahlfalle zuleitbar ist.

14. Lenksystem nach einem der vorstehenden Ansprüche, **dadurch gekennzeichnet, dass** das Faserarray wenigstens eine Lichtleitfaser aufweist, durch deren Auskoppelfläche Laserstrahlung wenigstens einem Sensor, insbesondere einem Intensitätssensor und/oder einem Leistungssensor zuleitbar ist.

15. Lenksystem nach Anspruch 14, **dadurch gekennzeichnet, dass** nur ein Teil der Laserstrahlung dem wenigstens einen Sensor zuleitbar ist.

16. Lenksystem nach einem der vorstehenden Ansprüche, **dadurch gekennzeichnet, dass** wenigstens ein Mantel der Lichtleitfasern strukturiert ist, so dass in den Mantel eingekoppelte Laserstrahlung zumindest zum Teil, vorzugsweise vollständig aus dem Mantel austritt.

17. Faserarray (12) für ein Lenksystem nach einem der vorstehenden Ansprüche

## Claims

1. A guidance system for a laser beam (4) for laser material machining, which comprises
- at least one deflection device (8) by way of which the laser beam (4) can be deflected,
- at least one supply line (6) through which the laser beam (4) can be fed to the deflection device (8),
- at least one fiber array (12) with a plurality of optical fibers (14) which is arranged in such a way that the laser beam is deflected by the deflection device onto a coupling surface (10) of the fiber array (12), the deflection device (8) comprising at least one non-mechanical deflection element, **characterized in that** the optical fibers (14) of the fiber array (12) each have a decoupling surface through which coupled laser radiation can be decoupled and which is arranged in such a way that decoupled laser radiation is fed to at least one laser material machining station, wherein the decoupled laser beams are directed onto multiple workpieces for laser material machining or to multiple points of a workpiece for laser material machining.

2. The guidance system according to claim 1, **characterized in that** at least one non-mechanical deflection element has an acousto-optic deflector by way of which the laser beam can be deflected.

3. The guidance system according to claim 1 or 2, **characterized in that** at least one non-mechanical deflection element has at least one electro-optic deflector, by way of which the laser beam can be deflected.

4. The guidance system according to one of the preceding claims, **characterized in that** at least one non-mechanical deflection element comprises a device for coherent beam combining.

5. The guidance system according to one of the preceding claims, **characterized in that** the deflection device also has at least one mechanical deflection element.

6. The guidance system according to claim 5, **characterized in that** at least one mechanical deflection element has a galvanometer scanner by way of which the laser beam can be deflected.

7. The guidance system according to claim 5 or 6, **characterized in that** at least one mechanical deflection element has a micro-electro-mechanical system, by way of which the laser beam can be deflected.

8. The guidance system according to one of the preceding claims, **characterized in that** the guidance system has at least one laser beam source.

9. The guidance system according to one of the preceding claims, **characterized in that** the laser radiation decoupled from the decoupling surface is fed to a further deflection device.

10. The guidance system according to one of the preceding claims, **characterized in that** the fiber array comprises at least 10, preferably at least 100, especially preferably at least 250 optical fibers.

11. The guidance system according to one of the preceding claims, **characterized in that** the fiber array has at least 10, preferably at least 100, especially preferably at least 250 optical fibers per square centimeter of cross-sectional surface.

12. The guidance system according to one of the preceding claims, **characterized in that** at least one substrate is preferably mounted, preferably welded or glued, to at least one part of the coupling surface, preferably the entire coupling surface, and/or at least one part of the decoupling surface, preferably all decoupling surfaces.

13. The guidance system according to one of the preceding claims, **characterized in that** the fiber array comprises at least one optical fiber, wherein laser radiation can be fed to a beam trap through its decoupling surface.

14. The guidance system according to one of the preceding claims, **characterized in that** the fiber array has at least one optical fiber, wherein laser radiation can be fed by way of its decoupling surface to at least one sensor, in particular an intensity sensor and/or a power sensor.

15. The guidance system according to claim 14, **characterized in that** only part of the laser radiation can be fed to the at least one sensor.

16. The guidance system according to one of the preceding claims, **characterized in that** at least one cladding of the optical fibers is structured so that laser radiation coupled into the cladding exits at least partially, preferably completely, from the cladding.

17. A fiber array (12) for a guidance system according to one of the preceding claims.

## Revendications

1. Système de guidage d'un faisceau laser (4) destiné à l'usinage de matériaux au laser, comprenant
- au moins un dispositif de déviation (8) permettant de dévier le faisceau laser (4),
- au moins un conduit d'alimentation (6) permettant d'acheminer le faisceau laser (4) vers le dispositif de déviation (8), et
- au moins un réseau de fibres (12) comportant une pluralité de fibres optiques (14), qui est agencé de telle sorte que le faisceau laser soit dévié par le dispositif de déviation vers une surface d'injection (10) du réseau de fibres (12),
le dispositif de déviation (8) comportant au moins un élément de déviation non mécanique,
**caractérisé en ce que** les fibres optiques (14) du réseau de fibres (12) présentent chacune une surface d'extraction (12) qui permet d'extraire le rayonnement laser injecté et qui est disposée de telle sorte que le rayonnement laser extrait soit acheminé vers au moins une station d'usinage de matériaux au laser, les faisceaux laser extraits étant dirigés vers plusieurs pièces à usiner pour l'usinage de matériaux au laser ou vers plusieurs emplacements d'une pièce à usiner pour l'usinage de matériaux au laser.

2. Système de guidage selon la revendication 1,
**caractérisé en ce qu'**au moins un élément de déviation non mécanique comporte un déflecteur acousto-optique permettant de dévier le faisceau laser.

3. Système de guidage selon la revendication 1 ou 2,
**caractérisé en ce qu'**au moins un élément de déviation non mécanique comporte au moins un déflecteur électro-optique permettant de dévier le faisceau laser.

4. Système de guidage selon l'une des revendications précédentes, **caractérisé en ce qu'**au moins un élément de déviation non mécanique comporte un dispositif de combinaison cohérente de faisceaux.

5. Système de guidage selon l'une des revendications précédentes, **caractérisé en ce que** le dispositif de déviation comporte en supplément au moins un élément de déviation mécanique.

6. Système de guidage selon la revendication 5,
**caractérisé en ce qu'**au moins un élément de déviation mécanique comporte un scanner à galvanomètre permettant de dévier le faisceau laser.

7. Système de guidage selon la revendication 5 ou 6,
**caractérisé en ce qu'**au moins un élément de déviation mécanique comporte un système micro-électromécanique permettant de dévier le faisceau laser.

8. Système de guidage selon l'une des revendications précédentes, **caractérisé en ce que** le système de guidage comporte au moins une source de faisceau laser.

9. Système de guidage selon l'une des revendications précédentes, **caractérisé en ce que** le rayonnement laser extrait de la surface d'extraction est acheminé vers un autre dispositif de déviation.

10. Système de guidage selon l'une des revendications précédentes, **caractérisé en ce que** le réseau de fibres comporte au moins 10, de préférence au moins 100, de manière particulièrement préférée au moins 250 fibres optiques.

11. Système de guidage selon l'une des revendications précédentes, **caractérisé en ce que** le réseau de fibres comporte au moins 10, de préférence au moins 100, de manière particulièrement préférée au moins 250 fibres optiques par centimètre carré de section transversale.

12. Système de guidage selon l'une des revendications précédentes, **caractérisé en ce qu'**au moins un substrat est monté, de préférence soudé ou collé, sur au moins une partie de la surface d'injection, de préférence sur toute la surface d'injection, et/ou sur au moins une partie des surfaces d'extraction, de préférence sur toutes les surfaces d'extraction.

13. Système de guidage selon l'une des revendications précédentes, **caractérisé en ce que** le réseau de fibres comporte au moins une fibre optique dont la surface d'extraction permet d'acheminer un rayonnement laser vers un piège à faisceau.

14. Système de guidage selon l'une des revendications précédentes, **caractérisé en ce que** le réseau de fibres comporte au moins une fibre optique dont la surface d'extraction permet d'acheminer un rayonnement laser vers au moins un capteur, en particulier un capteur d'intensité et/ou un capteur de puissance.

15. Système de guidage selon la revendication 14,
**caractérisé en ce que** seule une partie du rayonnement laser peut être acheminée vers ledit au moins un capteur.

16. Système de guidage selon l'une des revendications précédentes, **caractérisé en ce qu'**au moins une gaine des fibres optiques est structurée de telle sorte que le rayonnement laser injecté dans la gaine sorte de la gaine au moins en partie, de préférence entièrement.

17. Réseau de fibres (12) pour un système de guidage selon l'une des revendications précédentes.
